# FASCICULE DE BREVET EUROPEEN

(11) **EP 1 576 820 B1**
(45) Date de publication et mention de la délivrance du brevet: **27.02.2008**
(21) Numéro de dépôt: 03810011.1
(22) Date de dépôt: 22.12.2003
(51) Int. Cl.: H04N 7/167, H04L 9/08

(54) **PROCEDE ET SYSTEME DE SECURISATION DE DONNEES EMBROUILLEES**
VERFAHREN UND SYSTEM ZUR SICHERUNG VON VERSCHLÜSSELTEN DATEN
METHOD AND SYSTEM FOR SECURING SCRAMBLED DATA

(30) Priorité: 24.12.2002 FR 0216650
(43) Date de publication de la demande: 21.09.2005
(73) Titulaire: Viaccess, 92057 Paris La Défense Cedex (FR)
(72) Inventeur: MERLE, Gilles, F-78480 VERNEUIL SUR SEINE (FR); BANGUI, François, F-75646 PARIS 13ème (FR)
(74) Mandataire: Poulin, Gérard
(86) Numéro de dépôt international: PCT/FR2003/050202
(87) Numéro de publication internationale: WO 2004/059976

(56) Documents cités:
- EP-A- 0 984 630
- WO-A-02/069638
- US-A1- 2001 053 221

## Description

### DOMAINE TECHNIQUE

L'invention se situe dans le domaine du contrôle d'accès à des données embrouillées.

Elle concerne plus spécifiquement un procédé de sécurisation de données embrouillées fournies à une pluralité de terminaux récepteurs, chacun desdits terminaux étant muni d'une pluralité de modules de désembrouillage Mj (j=1...M) ayant chacun une capacité de traitement et un niveau de sécurité spécifique, lesdites données étant préalablement subdivisées en un nombre entier de familles Fj (j=1...M) comportant chacune un nombre entier de blocs Bi (i=1...N), chaque bloc Bi (i=1...N) d'une famille Fj étant embrouillés par une clé Kj (j=1...M) associée à la famille Fj.

Les terminaux récepteurs sont des équipements mobiles (ME) (pour Mobile Equipment en anglais) à usage grand public tels que par exemple des téléphones portables, des assistants numériques personnels appelés PDA (pour Personal Digital Assistant en anglais) ou encore des récepteurs audiovisuels ou des ordinateurs.

L'invention concerne également un système de sécurisation de données et/ou services comportant une plate-forme d'embrouillage et une plate-forme de désembrouillage destinées à mettre en oeuvre le procédé.

Les données à sécuriser sont des oeuvres littéraires ou artistiques protégées par un système numérique de gestion de droits DRM (pour Digital Right Management). Ces oeuvres peuvent être soit mémorisées sur un support tel que par exemple un CD ROM ou un DVD, soit transmises ou téléchargées à partir d'un serveur distant vers une pluralité de terminaux récepteurs connectés à un réseau de transmission.

### ETAT DE LA TECHNIQUE ANTERIEURE

Dans les systèmes de sécurisation de données de l'art antérieur, le contenu à protéger (audio, vidéo, texte...) est embrouillé chez l'opérateur et déchiffré lors de sa réception chez l'abonné par un algorithme de désembrouillage mémorisé dans le terminal récepteur.

Un inconvénient majeur de ces systèmes provient du fait qu'à la réception, tout le contenu distribué est désembrouillé par un même module de désembrouillage. Aussi, en cas de piratage, la totalité de ce contenu devient accessible et peut alors être redistribué frauduleusement sur des réseaux illicites.

Une première solution connue pour pallier à ce problème consiste à confiner le module de désembrouillage dans un local à accès sécurisé. Cette solution n'est pas adaptée aux applications dans lesquelles les terminaux sont à usage grand public.

Une deuxième solution, basée sur le renforcement de la sécurité du récepteur lui-même, consiste à empêcher l'installation sur le terminal de tout logiciel suspect et d'autoriser l'installation uniquement de logiciels « certifiés », c'est-à-dire, des logiciels pour lesquels une autorisation de téléchargement a été donnée.

Cette solution n'est pas non plus adaptée aux applications citées ci-dessus qui utilisent des récepteurs « ouverts » munis d'une interface d'entrée sortie permettant de télécharger tout type de logiciels (ordinateurs, récepteurs audio et vidéo) par opposition aux terminaux « verrouillés » par fabrication, tels que les décodeurs par exemple, pour empêcher un abonné de télécharger frauduleusement des logiciels de désembrouillage.

La demande européenne EP0984630 décrit un procédé de sécurisation de données embrouillées fournies à une pluralité de terminaux récepteurs où chaque terminal est muni de deux modules de désembrouillage, un terminal de type PC et une carte SIM. Dans ce procédé, chaque premier bloc d'un groupe de x blocs est envoyé à et désembrouillé par la carte SIM alors que les autres blocs sont désembrouillés par le PC.

Le but de l'invention est de pallier les inconvénients de l'art antérieur cités ci-dessus.

### EXPOSÉ DE L'INVENTION

L'invention préconise un procédé de sécurisation de données embrouillées fournies à une pluralité de terminaux récepteurs dans lequel chacun desdits terminaux est muni d'une pluralité de modules de désembrouillage Mj (j=1...M) ayant chacun une capacité de traitement et un niveau de sécurité spécifique, et dans lequel les données sont préalablement subdivisées en un nombre entier de familles Fj (j=1...M) comportant chacune un nombre entier de blocs Bi (i=1...N), chaque bloc Bi (i=1...N) d'une famille Fj étant ensuite embrouillés par une clé Kj (j=1...M) associée à la famille Fj.

Selon l'invention lesdits bloc Bi (i=1...N) sont préalablement organisés en fonction des vitesses respectives de traitement des modules de désembrouillage Mj.

Selon l'invention, les modules Mj (j=1...M) sont des éléments périphériques différents associés audit terminal récepteur.

Grâce à l'invention, une attaque sur l'un des modules Mj (j=1...M) permet de reconstruire un fichier qui n'est pas complet car il manque la partie traitée par les autres modules. Le fichier piraté sera fortement dégradé par rapport à l'original et donc inexploitable.

Dans un premier mode de réalisation, les modules de désembrouillage Mj (j=1...M) comportent des algorithmes Aj (j=1...M) différents.

Dans un deuxième mode de réalisation les modules de désembrouillage Mj (j=1...M) comportent des algorithmes Aj (j=1...M) identiques.

Dans les deux modes de réalisation, les données à distribuer se présentent sous forme d'un fichier préalablement mémorisé ou sous forme d'un flux diffusé en temps réel.

Dans une application particulière du procédé selon l'invention, le flux de données représente des programmes audio et/ou vidéo ou des dessins animés (animation multimédia), ou encore des images de synthèses protégées par un système DRM.

L'invention concerne également un système de sécurisation de données embrouillées comportant une plate-forme d'embrouillage et une plate-forme de désembrouillage.

La plate-forme d'embrouillage comporte:
- des moyens pour subdiviser ledit flux en m familles distinctes de N blocs Bi (i=1...N),
- des moyens pour affecter à chaque famille un paramètre spécifique d'identification pj (j=1...M) associé à au moins un module de désembrouillage Mj ayant une capacité de traitement et un niveau de sécurité spécifiques,
- des moyens pour embrouiller chaque bloc Bi par une clé Kj (j=1...M) en relation biunivoque avec le paramètre pj.

Selon une caractéristique essentielle de l'invention, ladite plate-forme de désembrouillage comporte des moyens pour identifier la famille de chaque bloc Bi de manière à désembrouiller chaque bloc Bi d'une famille de type pj par le module Mj correspondant audit paramètre pj.

Selon un mode préféré de réalisation, la plate-forme de désembrouillage comporte une pluralité de modules de désembrouillage distincts Mj (i=1...M).

Dans une variante de réalisation de l'invention, les données à sécuriser sont des programmes audiovisuels diffusés à une pluralité d'abonnés munis de licence d'utilisation gérée par un système DRM.

L'équipement mobile peut être un PDA ou un téléphone mobile muni d'une carte à puce de type SIM (pour Subsciber Identity Module, en anglais).

Dans ce cas, les données sont réparties entre un premier module de désembrouillage M1 intégré dans le PDA (respectivement dans le téléphone mobile) et un deuxième module de désembrouillage M2 constitué par la carte à puce elle-même.

### BRÈVE DESCRIPTION DES DESSINS

D'autres caractéristiques et avantages de l'invention ressortiront de la description qui va suivre, prise à titre d'exemple non limitatif en référence aux figures annexées dans lesquelles :
- la figure 1 illustre schématiquement une étape de typage de données à sécuriser par le procédé selon l'invention,
- la figure 2 illustre schématiquement une étape d'embrouillage d'une famille de données obtenue par l'étape précédente,
- la figure 3 illustre schématiquement un premier mode de réalisation de la première et de la deuxième étape du procédé selon l'invention,
- la figure 4 représente schématiquement la phase de désembrouillage des familles de données obtenues par les étapes précédentes,
- la figure 5 représente un mode préféré de réalisation de l'étape illustrée par la figure 4,
- la figure 6 représente schématiquement un terminal mettant en oeuvre le procédé selon l'invention,
- la figure 7 représente un diagramme temporel illustrant schématiquement le traitement par le procédé selon l'invention d'un flux de données diffusées ou téléchargé en temps réel par le terminal,
- la figure 8 représente un diagramme temporel illustrant la gestion des clés d'embrouillage du flux de la figure 7.

### EXPOSÉ DÉTAILLÉ DE MODES DE RÉALISATION PARTICULIERS

La description qui suit concerne une application de l'invention dans laquelle les données embrouillées représentent des programmes audio et/ou vidéo diffusés ou téléchargés vers un PDA (pour Personal Digital Assistant) muni d'une carte à puce de type SIM. Le PDA comporte un premier module M1 de désembrouillage, un deuxième module de désembrouillage étant la carte SIM elle-même.

Les données à sécuriser peuvent être téléchargées à partir d'un support d'enregistrement (CD, DVD...) ou à partir d'un serveur spécialisé (Musique, vidéo, dessins animés, sonneries téléphoniques, livre électronique E-Book...). Elles peuvent également être diffusées dans un réseau.

Quels que soient l'application envisagée et le type de données, avant la distribution de ces données, le procédé comporte :
- une première phase de traitement comportant :
   - une étape de typage consistant à former m familles Fj (j= 1...M) de données comportant chacune un nombre nj blocs de données Bi (i=1...N), chaque famille étant identifiée par un paramètre pj.
   - une étape d'embrouillage de chaque bloc Bi d'une famille Fj par une clé Kj (j=1...M) en relation biunivoque avec le paramètre pj.
- et à réception des données par un terminal, celles-ci subissent une deuxième phase de traitement comportant :
   - une étape d'identification de la famille de chaque bloc Bi reçu,
   - une étape de désembrouillage de chaque bloc Bi au moyen de la clé Kj par un module Mj (j=1...M) identifié par un paramètre pj.

Selon une caractéristique essentielle de l'invention, les module Mj (j=1...M) qui permettent de désembrouiller les blocs Bi de deux familles distinctes sont différents.

Ceux-ci peuvent être soit des périphériques différents associés au terminal récepteur, ou des logiciels indépendants stockés dans la mémoire du terminal ou d'un périphérique.

### Cas d'un fichier de données préalablement mémorisé.

### Typage

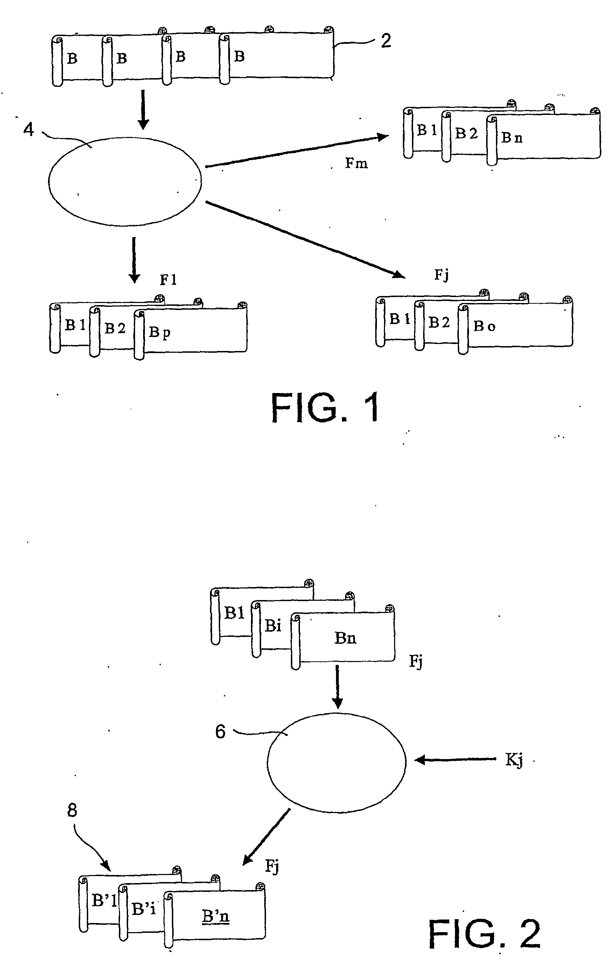

La figure 1 représente un fichier 2 de données audio et/ou vidéo organisées en blocs appelés unités d'accès AU (pour Access Unit) selon la norme MPEG 4 (pour Motion Picture Expert Group).

Une première étape 4 du procédé consiste à découper le fichier 2 en m familles Fj (j=1...m) comportant chacune un nombre entier nj de blocs Bi (i=1...N) ; Chaque famille Fj est identifiée par paramètre pj (j=1...m).

Le paramètre pⱼ identifie également le module Mj qui sera chargé de désembrouiller les blocs Bi de la famille Fj.

Dans l'application décrite, le fichier est découpé en deux familles F₁ et F₂ dont les blocs respectifs seront désembrouillés respectivement par un module M1 intégré au PDA et par la carte SIM constituant le module M2.

Lors du typage, un paramètre p1 est associé à la famille F1 de blocs Bi qui seront désembrouillés par le module M1 et un paramètre p2 est associé à la famille F₂ de blocs Bi qui seront désembrouillés par la carte SIM.

### Embrouillage

La figure 2 illustre une deuxième étape 6 au cours de laquelle les blocs Bi d'une famille Fⱼ sont embrouillés par une clé Kⱼ (j=1,2) définie en fonction de la capacité de traitement et du degré de sécurité respectifs du module M₁ intégré au PDA et de la carte SIM. Les blocs embrouillées B'ᵢ sont stockés dans un fichier 8.

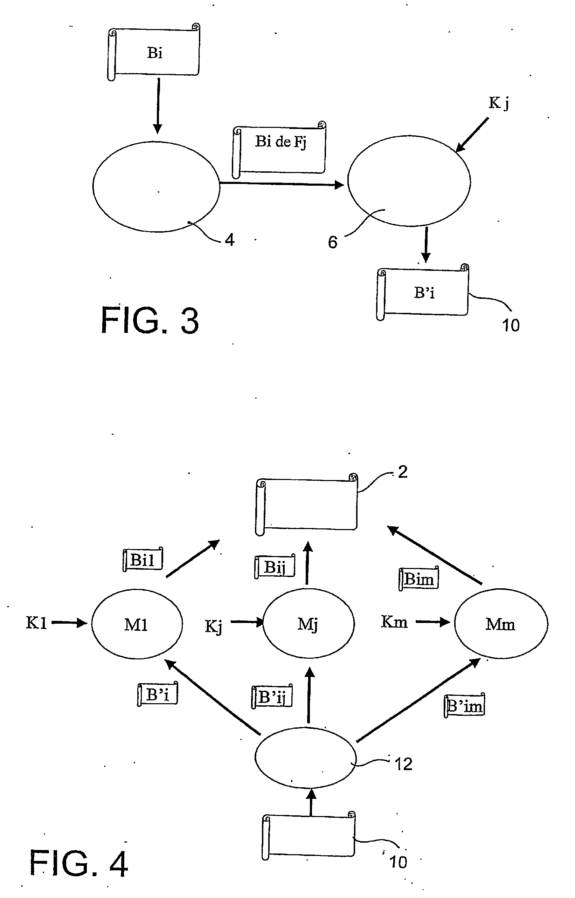

Dans une variante de réalisation du procédé illustrée schématiquement par la figure 3, le typage 4 et l'embrouillage 6 d'un bloc Bᵢ sont réalisés successivement.

Dans une autre variante de réalisation non représentée, l'embrouillage est réalisé famille par famille.

Le fichier 10 contenant les blocs B'ᵢ embrouillés est ensuite transmis au PDA.

### Désembrouillage

La figure 4 illustre la phase de désembrouillage d'un fichier 10 comportant des familles Fj distinctes de blocs MPEG préalablement embrouillés.

A l'étape 12, les blocs B'ᵢ sont identifiés par leur paramètre respectif pⱼ puis aiguillés sur les modules de désembrouillage correspondant Mⱼ.

Les blocs déchiffrés sont ensuite réarrangés pour former le fichier d'origine 2 qui sera fourni à l'utilisateur.

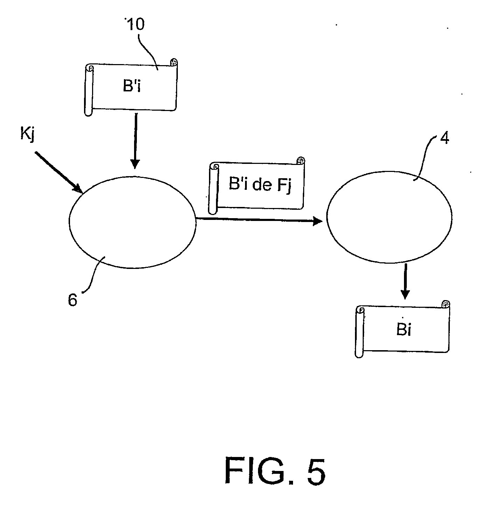

La figure 5 illustre schématiquement un mode préféré de réalisation du désembrouillage dans lequel les blocs Bi contenus dans le fichier 10 sont traités à la volée bloc par bloc.

### Traitement temporel d'un flux de données

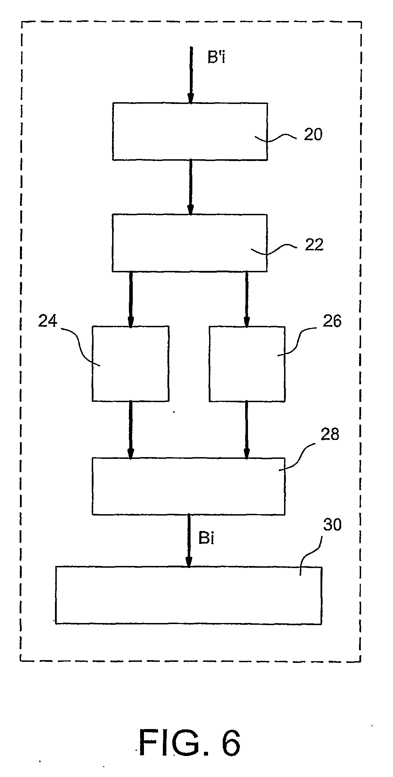

La figure 6 représente schématiquement les modules internes d'un PDA permettant de réaliser le désembrouillage.

Le PDA illustré comporte un étage d'entrée 20 chargé d'identifier les blocs B'i dans un flux, un étage 22 de démultiplexage, un premier module de désembrouillage 24, une carte à puce constituant un deuxième module de désembrouillage 26, un étage de multiplexage 28 et un étage de sortie 30.

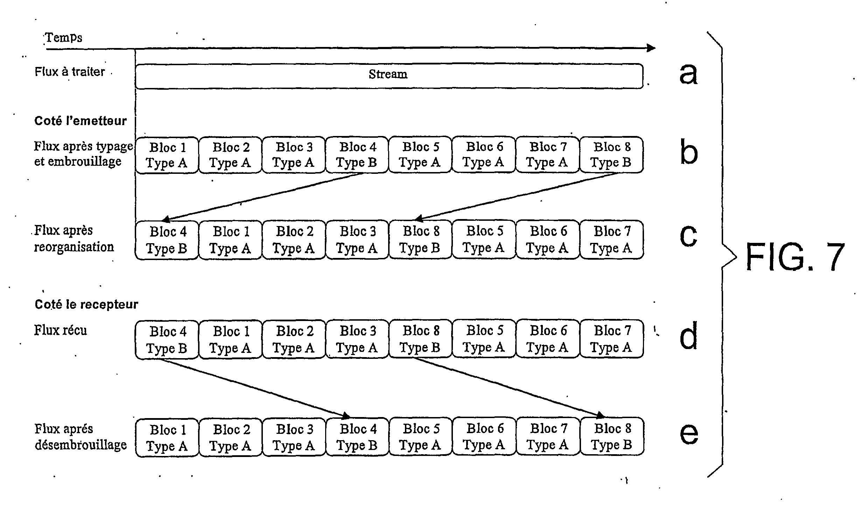

La figure 7a illustre schématiquement un flux de données diffusé ou téléchargé comportant des blocs Bi au format MPEG 4.

Un premier traitement de ce flux, réalisé au niveau de l'émetteur, consiste à réorganiser les blocs MPEG en fonction des capacités et des vitesses respectives de traitement du module M1 et de la carte SIM.

La figure 7b représente le flux de la figure 7a dans laquelle ont été créées une famille formée par des blocs de type A et une famille formée par des blocs de type B.

Dans cet exemple, les blocs de type A seront désembrouillés par le module M1 et les blocs de type B par la carte SIM.

Du fait que la capacité et la vitesse de traitement de la carte SIM sont inférieures à celles du décodeur, à l'émission, les blocs de type B sont décalés de trois blocs en amont de manière à compenser la différence de vitesse de traitement entre le décodeur et la carte SIM.

La figure 7c représente la répartition temporelle des blocs du flux diffusé après embrouillage et réorganisation.

La figure 7d représente la répartition temporelle des blocs du flux reçus par le PDA avant désembrouillage, et la figure 7e représente la répartition temporelle des blocs du flux désembrouillé.

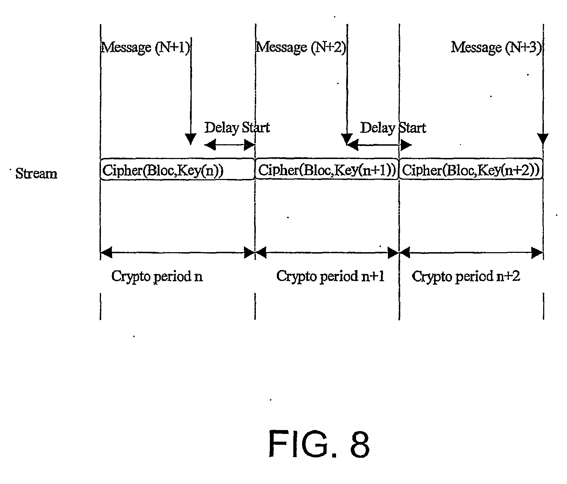

La figure 8 illustre schématiquement le mécanisme de changement de clés pour désembrouiller les blocs du flux traité.

On désigne par crypto-période la durée de validité d'une clé de désembrouillage. Avant chaque début de crypto-période un message est inséré dans le flux afin de prévenir le module de désembrouillage du changement de crypto-période. Ce message contient l'ensemble des informations nécessaires pour désembrouiller le flux pendant la crypto-période suivante (par exemple la référence de la clé de désembrouillage à utiliser). Ce message est inséré dans le flux avant le début de la crypto-période (delay start) afin de permettre au module de désembrouillage de traiter les informations du message et d'être prêt à désembrouiller en temps réel les données de la crypto-période à venir.

### Les Applications

Cette invention s'applique à des contenus où la perte d'une partie de l'information rend le contenu inexploitable. Cela s'applique à l'ensemble des contenus audio et vidéo numériques compressés où la perte d'information se traduit par une dégradation rapide de la qualité (audio, vidéo, Ebook, sonneries de téléphones portable, image..).

Les modules de déchiffrement visés sont :
- des supports amovibles type carte à puce, carte à puce sans contact, module détachable (PCMCIA, série, USB, Ethernet).
- des terminaux type PC, serveur, décodeur numérique, récepteur mobile (Téléphone Mobile, PDA).

### Les services :

- VOD (Video On Demand) en diffusion ou en téléchargement,
- MOD (Music On Demand) en diffusion ou en téléchargement,
- Diffusion de livre électronique en ligne,
- Diffusion de sonnerie pour téléphone mobile,
- Diffusion de photo/image,
- Diffusion de texte, document multimédia.

## Revendications

1. Procédé de sécurisation de données embrouillées fournies à une pluralité de terminaux récepteurs, chacun desdits terminaux étant muni d'une pluralité de modules de désembrouillage Mj (j=1...M), M étant supérieur à 1, ayant chacun une capacité de traitement et un niveau de sécurité différents, lesdites données étant préalablement subdivisées en un nombre entier de familles Fj (j=1...M) comportant chacune un nombre entier de blocs Bi (i=1...Nⱼ), à chaque famille Fj est affecté un paramètre spécifique d'identification pj (j=1...M) associé à un module de désembrouillage Mj ayant une capacité de traitement et un niveau de sécurité spécifiques, procédé **caractérisé en ce que** :
- à l'émission, chaque bloc Bi (i=1...Nⱼ) d'une famille Fj est embrouillé par une clé Kj (j=1...M) en relation biunivoque avec le paramètre pj, définie en fonction de la capacité de traitement et du degré de sécurité des modules de déchiffrement respectifs Mj (j=1...M), et
- à la réception, chaque bloc Bi (i=1...Nⱼ) est identifié par son paramètre pj et désembrouillé par le module Mⱼ au moyen de la clé Kⱼ (j=1...M) associée à la famille Fj.

2. Procédé selon la revendication 1, **caractérisé en ce que** les modules Mj (j=1...M) sont des éléments périphériques différents associés audit terminal récepteur.

3. Procédé selon la revendication 2, **caractérisé en ce que** les modules de désembrouillage Mj (j=1...M) comportent des algorithmes Aj (j=1...M) différents.

4. Procédé selon la revendication 2, **caractérisé en ce que** les module de désembrouillage Mj (j=1...M) comportent des algorithmes Aj (j=1...M) identiques.

5. Procédé selon l'une des revendications 1 à 4, **caractérisé en ce que** les données à distribuer se présentent sous forme d'un fichier préalablement mémorisé.

6. Procédé selon l'une des revendications 1 à 4, **caractérisé en ce que** les données à sécuriser se présentent sous forme d'un flux diffusé ou téléchargé et traité en temps réel par le terminal.

7. Procédé selon les revendications 5 ou 6, **caractérisé en ce que** la durée d'utilisation du flux est divisée en crypto-périodes correspondant chacune à une clé de désembrouillage, et **en ce qu'**avant chaque début de crypto-période un message est inséré dans le flux afin de prévenir le module de désembrouillage Mj du changement de crypto-période.

8. Procédé selon la revendication 7, **caractérisé en ce que** ledit message comporte l'ensemble des informations nécessaires pour désembrouiller le flux utilisé pendant la crypto-période suivante.

9. Procédé selon l'une des revendications 1 à 8, **caractérisé en ce que** lesdites données représentent des programmes audio et/ou vidéo protégés par un système DRM.

10. Procédé selon l'une des revendications 1 à 8, **caractérisé en ce que** lesdites données représentent des images de synthèse ou des dessins animés.

11. Système de sécurisation de données embrouillées fournies à une pluralité de terminaux récepteurs, **caractérisé en ce qu'**il comporte :
- une plate-forme d'embrouillage comprenant :
• des moyens pour subdiviser lesdites données en M>1 familles distinctes de N blocs Bi (i=1... Nⱼ),
• des moyens pour affecter à chaque famille Fj un paramètre spécifique d'identification pj (j=1...M) associé à un module de désembrouillage Mj ayant une capacité de traitement et un niveau de sécurité différents,
• des moyens pour embrouiller chaque bloc Bi par une clé Kj (j=1...M) en relation biunivoque avec le paramètre pj,
- et une plate-forme de désembrouillage comportant des moyens pour identifier la famille de chaque bloc Bi par son paramètre d'identification de manière à désembrouiller chaque bloc Bi d'une famille de type pj par le module Mj correspondant audit paramètre pj au moyen de la clé Kj.

12. Système selon la revendication 11, **caractérisé en ce que** les modules de désembrouillages distincts Mj (j=1...M) sont des périphériques distincts associés au terminal récepteur.

13. Plate-forme d'embrouillage d'un flux de données, **caractérisée en ce qu'**elle comporte :
- des moyens pour subdiviser ledit flux en M > 1 familles distinctes Fj (j=1...M) de N blocs Bi (i=1... Nⱼ),
- des moyens pour affecter à chaque famille Fj (j=1...M) un paramètre spécifique d'identification pj (j=1...M) associé à un module de désembrouillage Mj ayant une capacité de traitement et un niveau de sécurité différents,
- des moyens pour définir pour chaque module Mj (j=1...M) une clé Kj (j=1...M) en fonction de la capacité de traitement et du degré de sécurité dudit Mj (j=1...M),
- des moyens pour embrouiller chaque bloc Bi appartenant à une famille Fj (j=1...M) par le module Mⱼ au moyen d'une clé Kj (j=1...M) en relation biunivoque avec le paramètre pj.

14. Plate-forme de désembrouillage d'un flux de données préalablement subdivisé en M > 1 familles distinctes Fj (j=1...M) de N blocs Bi (i=1... Nⱼ) identifiées chacune par un paramètre spécifique pj (j=1...M) associé à un module de désembrouillage Mj ayant une capacité de traitement et un niveau de sécurité différents, ladite plateforme de désembrouillage étant **caractérisée en ce qu'**elle comporte des moyens pour identifier la famille de chaque bloc Bi par son paramètre d'identification de manière à désembrouiller chaque bloc Bi d'une famille de type pj par le module Mj correspondant audit paramètre pj au moyen de la clé Kj.

15. Plate-forme de désembrouillage selon la revendication 14, **caractérisée en ce que** le terminal récepteur est un PDA et **en ce que** l'un desdits modules de désembrouillage Mj (i=1...M) est intégré au PDA et au moins deuxième module est une carte à puce de type SIM connectée audit PDA.

16. Utilisation du procédé selon l'une des revendications 1 à 8 pour sécuriser un service de vidéo à la demande (VOD).

17. Utilisation du procédé selon l'une des revendications 1 à 8 pour sécuriser un service de Musique à la demande (MOD).

18. Utilisation du procédé selon l'une des revendications 1 à 8 pour sécuriser l'accès à un service diffusion de livre électronique en ligne ou téléchargé à partir d'un support amovible.

## Claims

1. Method for securing scrambled data supplied to a plurality of receiver terminals, each of said terminals being provided with a plurality of descrambling modules Mj (j = 1...M), M exceeding 1, each having a specific processing capacity and different levels of security, said data being previously subdivided into M families Fj (j = 1...M), each comprising an integral number of blocks Bi (i = 1...Nj), where to each family Fj is allocated a specific identification parameter pj (j = 1...M) associated with a descrambling module Mj having a specific processing capacity and a specific security level, **characterized in that**:
- on transmission, each block Bi (i = 1...Nj) of a family Fj is descrambled by a key Kj (j = 1...M) in biunivocal relationship with the parameter Pj defined as a function of the processing capacity and degree of security of the respective descrambling modules Mj (j = 1,..M) and
- on reception, each block Bi (i = 1...Nj) is identified by its parameter pj and descrambled by the module Mj by means of the key Kj (j = 1...M) associated with the family Fj.

2. Method as claimed in claim 1, **characterized in that** the modules Mj (j = 1...M) are different peripheral elements associated with said receiver terminal.

3. Method as claimed in claim 2, **characterized in that** the descrambling modules Mj (j = 1...M) comprise different algorithms Aj (j=1...M).

4. Method as claimed in claim 2, **characterized in that** the descrambling modules Mⱼ (j = 1...M) comprise identical algorithms Aj (j=1...M).

5. Method as claimed in any one of claims 1 to 4, **characterized in that** the data to be distributed are in the form of a previously stored file.

6. Method as claimed in any one of claims 1 to 4, **characterized in that** the data to be secured are in the form of a broadcast or downloaded stream and processed in real time by the terminal.

7. Method as claimed in claim 5 or 6, **characterized in that** the duration of use of the stream is divided into crypto periods, each corresponding to a descrambling key, and **in that** prior to each start of the crypto period a message is inserted into the stream so as to warn the descrambling module Mj of the change in crypto period.

8. Method as claimed in claim 7, **characterized in that** said message comprises all information necessary for descrambling the stream utilized during the following crypto period.

9. Method as claimed in any one of claims 1 to 8, **characterized in that** said data represent audio and/or video programs protected by a DRM system.

10. Method as claimed in any one of claims 1 to 8, **characterized in that** said data represent synthesis images or cartoons.

11. System for securing scrambled data supplied to a plurality of receiver terminals, **characterized in that** it comprises:
a scrambling platform comprising:
- means for subdividing said data into M>1 distinct families of N blocks Bi (i = 1...Nj),
- means for assigning each family Fj a specific identification parameter pj (j = 1...M) associated with a descrambling module Mj having a different processing capacity and a different level of security,
- means for scrambling each block Bi by a key Kj (j = 1...M) in biunivocal relation with the parameter pj,
and a descrambling platform comprising means for identifying the family of each block Bi by its identification parameter so as to descramble each block Bi of a family of type pj by the module Mj corresponding to said parameter pj by means of the key Kj.

12. System as claimed in claim 11, **characterized in that** the descrambling distinct modules Mj (j = 1...M) are distinct peripherals associated with the receiver terminal.

13. A scrambled platform for a stream of data, **characterized in that** it comprises:
- means for subdividing said stream into M>1 distinct families Fj (j = 1...M) of N blocks Bi (i = 1...Nj),
- means for assigning each family Fj (j = 1...M) a specific identification parameter pj (j = 1...M) associated with a descrambling module Mj having a different processing capacity and a different level of security
- means for defining for each module Mj (j = 1...M) a key Kj (j = 1...M) as a function of the processing capacity and the degree of security of said Mj (j = 1...M),
- means for scrambling each block Bi belonging to a family Fj (j = 1...M) by module Mj by a key Kj (j = 1...M) in biunivocal relation with the parameter pj.

14. Descrambling platform a stream of data previously divided into M>1 distinct families Fj (j = 1...M) of N blocks Bi (i = 1...Nj), each identified by a specific parameter pj (j = 1...M) associated with a descrambling module Mj having a different processing capacity and a different security level, said descrambling platform being **characterized in that** it comprises means for identifying the family of each block Bi by its identification parameter, so as to descramble each block Bi of a family of type pj by the module Mj corresponding to said parameter pj by means of the key Kj.

15. Descrambling platform as claimed in claim 14, **characterized in that** the receiver terminal is a PDA and **in that** one of said descrambling modules Mj (j = 1...M) is integrated into the PDA and at least a second module is a smart card of SIM type connected to said PDA.

16. Use of the process as claimed in any one of claims 1 to 8 for securing a video-on-demand service (VOD).

17. Use of the process as claimed in any one of claims 1 to 8 for securing a music-on-demand service (MOD).

18. Use of the process as claimed in any one of claims 1 to 8 for securing access to a broadcast service for electronic books either online or downloaded from portable media.

## Patentansprüche

1. Verfahren zur Sicherung von verwürfelten Daten, die an eine Mehrzahl von Empfangsterminals geliefert werden, wobei jeder der Terminals mit einer Mehrzahl von Entwürfelungsmodulen Mj (j=1...M) ausgestattet ist, wobei M > 1 ist, die jeweils eine verschiedene Verarbeitungskapazität und ein verschiedenes Sicherheitsniveau besitzen, wobei die Daten zuvor in eine ganze Zahl von Familien Fj (j=1...M) unterteilt sind, die jeweils eine ganze Zahl von Blöcken Bi (i=1...Nⱼ) umfassen, wobei jeder Familie Fj ein spezifischer Identifikationsparameter pj (j=1...M) zugewiesen ist, der einem Entwürfelungsmodul Mj mit einer spezifischen Verarbeitungskapazität und einem spezifischen Sicherheitsniveau zugeordnet ist, wobei das Verfahren **dadurch gekennzeichnet ist, dass**:
- beim Senden jeder Block Bi (i=1...Nⱼ) einer Familie Fj mittels eines Schlüssels Kj (j=1...M) in eineindeutiger Relation mit dem Parameter pj verwürfelt wird, der als Funktion der Verarbeitungskapazität und des Sicherheitsgrads der jeweiligen Dechiffriermodule Mj (j=1...M) definiert ist, und
- beim Empfangen jeder Block Bi (i=1...Nⱼ) mittels seines Parameters pj identifiziert wird und durch das Modul Mj mit Hilfe des Schlüssels Kj (j=1...M) entwürfelt wird, der der Familie Fj zugeordnet ist.

2. Verfahren nach Anspruch 1, **dadurch gekennzeichnet, dass** die Module Mj (j=1...M) verschiedene Peripherieelemente sind, die dem Empfangsterminal zugeordnet sind.

3. Verfahren nach Anspruch 2, **dadurch gekennzeichnet, dass** die Entwürfelungsmodule Mj (j=1...M) verschiedene Algorithmen Aj (j=1...M) umfassen.

4. Verfahren nach Anspruch 2, **dadurch gekennzeichnet, dass** die Entwürfelungsmodule Mj (j=1...M) identische Algorithmen Aj (j=1...M) umfassen.

5. Verfahren nach einem der Ansprüche 1 bis 4, **dadurch gekennzeichnet, dass** die zu verteilenden Daten die Form einer zuvor abgespeicherten Datei aufweisen.

6. Verfahren nach einem der Ansprüche 1 bis 4, **dadurch gekennzeichnet, dass** die zu sichernden Daten die Form eines ausgestrahlten oder heruntergeladenen und in Echtzeit durch den Terminal verarbeiteten Stroms aufweisen.

7. Verfahren nach den Ansprüchen 5 oder 6, **dadurch gekennzeichnet, dass** die Verwendungsdauer des Stroms in Kryptoperioden unterteilt ist, die jeweils einem Entwürfelungsschlüssel entsprechen, und dass vor jedem Beginn einer Kryptoperiode eine Nachricht in den Strom eingefügt wird, um zu verhindern, dass das Entwürfelungsmodul Mj die Kryptoperiode ändert.

8. Verfahren nach Anspruch 7, **dadurch gekennzeichnet, dass** die Nachricht die Gesamtheit der Informationen umfaßt, die erforderlich sind, um den verwendeten Strom während der nachfolgenden Kryptoperiode zu entwürfeln.

9. Verfahren nach einem der Ansprüche 1 bis 8, **dadurch gekennzeichnet, dass** die Daten Audio- und/oder Videoprogramme darstellen, die durch ein DRM-System geschützt sind.

10. Verfahren nach einem der Ansprüche 1 bis 8, **dadurch gekennzeichnet, dass** die Daten synthetische Bilder oder bewegte Bilder darstellen.

11. System zur Sicherung von verwürfelten Daten, die an eine Mehrzahl von Empfangsterminals geliefert werden, **dadurch gekennzeichnet, dass** es umfaßt:
- eine Verwürfelungsplattform, umfassend:
• Mittel zum Unterteilen der Daten in M > 1 verschiedene Familien von N Blöcken Bi (i=1...Nⱼ),
• Mittel zum Zuweisen eines spezifischen Identifikationsparameters pj (j=1...M) zu jeder Familie Fj, der einem Entwürfelungsmodul Mj zugeordnet ist, mit einer verschiedenen Verarbeitungskapazität und einem verschiedenen Sicherheitsniveau,
• Mittel zum Verwürfeln jedes Blocks Bi mittels eines Schlüssels Kj (j=1...M) in eineindeutiger Relation mit dem Parameter pj,
- und eine Entwürfelungsplattform, umfassend Mittel zum Identifizieren der Familie jedes Blocks Bi mittels seines Identifikationsparameters derart, dass jeder Block Bi einer Familie vom Typ pj mittels des Moduls Mj entsprechend dem Parameter pj mit Hilfe des Schlüssels Kj entwürfelt wird.

12. System nach Anspruch 11, **dadurch gekennzeichnet, dass** die verschiedenen Entwürfelungsmodule Mj (j=1...M) verschiedene Peripheriegeräte sind, die dem Empfangsterminal zugeordnet sind.

13. Plattform zur Verwürfelung eines Datenstroms, **dadurch gekennzeichnet, dass** sie umfaßt:
- Mittel zum Unterteilen des Stroms in M > 1 verschiedene Familien Fj (j=1...M) von N Blöcken Bi (i=1...Nⱼ),
- Mittel zum Zuweisen eines spezifischen Identifikationsparameters pj (j=1...M) zu jeder Familie Fj (j=1...M), der einem Entwürfelungsmodul Mj mit einer verschiedenen Verarbeitungskapazität und einem verschiedenen Sicherheitsniveau zugeordnet ist,
- Mittel zum Definieren, für jedes Modul Mj (j=1...M), eines Schlüssels Kj (j=1...M) als Funktion der Verarbeitungskapazität und des Sicherheitsgrads des Moduls Mj (j=1...M),
- Mittel zum Verwürfeln jedes Blocks Bi, der zu einer Familie Fj (j=1...M) gehört, mittels des Moduls Mj mit Hilfe eines Schlüssels Kj (j=1...M) in eineindeutiger Relation mit dem Parameter pj.

14. Plattform zur Entwürfelung eines Datenstroms, der zuvor in M > 1 verschiedene Familien Fj (j=1...M) von N Blöcken Bi (i=1...Nⱼ) unterteilt worden ist, die jeweils durch einen spezifischen Parameter pj (j=1...M) identifiziert werden, der einem Entwürfelungsmodul Mj mit einer verschiedenen Verarbeitungskapazität und einem verschiedenen Sicherheitsniveau zugeordnet ist, wobei die Entwürfelungsplattform **dadurch gekennzeichnet ist, dass** sie Mittel umfaßt zum Identifizieren der Familie jedes Blocks Bi mittels seines Identifikationsparameters derart, dass jeder Block Bi einer Familie vom Typ pj mittels des Moduls Mj entsprechend dem Parameter pj mit Hilfe des Schlüssels Kj entwürfelt wird.

15. Plattform zur Entwürfelung nach Anspruch 14, **dadurch gekennzeichnet, dass** der Empfangsterminal ein PDA ist, und dass eines der Entwürfelungsmodule Mj (j=1...M) in den PDA integriert ist, und dass mindestens ein zweites Modul eine Chipkarte vom Typ SIM ist, die an den PDA angeschlossen ist.

16. Verwendung des Verfahrens nach einem der Ansprüche 1 bis 8 zur Sicherung eines Video-auf-Anfrage-Dienstes (video on demand, VOD).

17. Verwendung des Verfahrens nach einem der Ansprüche 1 bis 8 zur Sicherung eines Musik-auf-Anfrage-Dienstes (music on demand, MOD).

18. Verwendung des Verfahrens nach einem der Ansprüche 1 bis 8 zur Sicherung des Zugangs zu einem Dienst zur Ausstrahlung eines elektronischen Buchs online oder durch Herunterladen ausgehend von einem beweglichen Träger.
